# FASCICULE DE BREVET EUROPEEN

(11) **EP 2 609 155 B1**
(45) Date de publication et mention de la délivrance du brevet: **11.10.2017**
(21) Numéro de dépôt: 11746540.1
(22) Date de dépôt: 19.08.2011
(51) Int. Cl.: C08L 77/00, C08J 3/20, B60R 21/235, B29B 17/04, B09B 3/00

(54) **RECYCLAGE DE COUSSINS GONFLABLES DE SECURITE A BASE DE POLYAMIDE**
RECYCLING VON POLYAMID-AIRBAGS
RECYCLING POLYAMIDE AIRBAGS

(30) Priorité: 26.08.2010 FR 1056777
(43) Date de publication de la demande: 03.07.2013
(73) Titulaire: Rhodia Operations, 93306 Aubervilliers (FR)
(72) Inventeur: BASIRE, Charlotte, F-69970 Marennes (FR)
(74) Mandataire: Vande Gucht, Anne
(86) Numéro de dépôt international: PCT/EP2011/064315
(87) Numéro de publication internationale: WO 2012/025465

(56) Documents cités:
- EP-A1- 2 042 649
- FR-A1- 2 901 278
- JP-A- 2003 119 330
- JP-A- 2003 191 239
- US-A- 5 569 424
- MARSH G: "Facing up to the recycling challenge", REINFORCED PLASTICS, ELSEVIER ADVANCED TECHNOLOGY, NEW YORK, NY, US, vol. 45, no. 6, 1 juin 2001 (2001-06-01), pages 22-26, XP004250590, ISSN: 0034-3617, DOI: 10.1016/S0034-3617(01)80204-6
- PERRIN D ET AL: "Syltec: un procédé innovant pour le recyclage des matériaux composites à matrice thermodurcissable", MATERIAUX ET TECHNIQUES, DUNOD, PARIS, FR, vol. 95, 1 janvier 2007 (2007-01-01), pages 121-131, XP009146314, ISSN: 0032-6895

## Description

La présente invention concerne un procédé de fabrication d'une composition polyamide, notamment pour le moulage, obtenue par mélange d'un matériau polyamide et d'une poudre de résidus de coussins gonflables de sécurité et éventuellement de charges de renfort. L'invention concerne notamment un procédé de recyclage de coussins gonflables de sécurité en fin de vie.

### ART ANTERIEUR

Les coussins gonflables de sécurité, appelés couramment airbag ou air-bag, sont des sacs de protection gonflables utilisés pour la protection des occupants d'un véhicule dans lesquels un gaz est très rapidement injecté par une réaction chimique explosive, pour les gonfler et ainsi amortir les chocs. Connectés à des capteurs de détection des chocs et disposés devant le capot et à la base du pare-brise, ils se gonflent et limitent les risques de blessures graves lors d'un d'impact avec un piéton ou véhicule. Ces articles comprennent généralement un sac à base de polyamide, généralement sous forme de tissés de fibres, sur plusieurs couches, et un revêtement de silicone sur une des faces. Les air-bags sont très majoritairement fabriqués par dépôt d'une composition silicone réticulable pour former une couche mince d'élastomère silicone.

Il se pose le problème du recyclage des composants de ces articles et notamment de la récupération du matériau plastique. En effet, il est très difficile de dissocier mécaniquement le matériau silicone de la matière plastique. Il existe pour ce faire des voies chimiques mais qui présentent des inconvénients dans leur mise en oeuvre et qui altèrent souvent les propriétés de la matière thermoplastique.

Il existe ainsi un besoin de mettre au point un procédé simple à mettre en oeuvre permettant un recyclage optimal de ces articles, sans notamment altérer négativement ou dégrader la matrice plastique ; et éventuellement en évitant une étape de traitement supplémentaire.

Il est connu de la demande de brevet japonais JP2003-191239, de couper des air-bags à base de polyamide en morceaux et de les extruder pour former des granulés prêts à être utilisés pour la fabrication d'articles moulés. Toutefois, ces articles obtenus à partir de matière polyamide usagé ne présentent pas de propriétés mécaniques satisfaisantes.

JP 2003-119330 divulgue un procédé de recyclage de résidus d'airbags à base de polyamide (PA 66) sous forme de morceaux dans une composition thermoplastique comprenant une polyoléfine modifiée et des fibres de verre.

US 5 569 424 A, MARSH G: "Facing up to the recycling challenge", REINFORCED PLASTICS, ELSEVIER ADVANCED TECHNOLOGY, NEW YOUR, NY, US, vol. 45, no. 6, 1 juin 2001 (2001-06-01), pages 22-26 et PERRIN D ET AL: "Syltec: un procédé innovant pour le recyclage des matériaux composites à matrice thermodurcissable", MATERIAUX ET TECHNIQUES, DUNOD, PARIS, FR, vol. 95, 1 janvier 2007 (2007-01-01), pages 121-131 divulguent l'utilisation des matériaux composites sous forme de poudre.

Il existe ainsi un besoin de valoriser des air-bags à base de polyamide qui soient des déchets industriels ou des air-bags en fin de vie pour la fabrication de formulations polyamides présentant des propriétés proches ou équivalentes aux formulations polyamides habituels.

### INVENTION

La présente invention a ainsi pour objet un procédé de fabrication d'une composition polyamide, permettant de réaliser le recyclage de résidus de coussins gonflables de sécurité qui ne sont pratiquement pas recyclés actuellement et sont mis en décharge, ce qui outre les couts qu'entrainent une telle élimination, pose des problèmes en ce qui concerne la protection de l'environnement.

Ce procédé consiste à mélanger, à froid ou à l'état fondu, un matériau polyamide avec 15 à 50 % en poids d'une poudre de résidus de coussins gonflables de sécurité, ce que ladite poudre est obtenue à partir de coussins gonflables de sécurité à base de polyamide comprennent un revêtement à base de silicone, et éventuellement des additifs et des charges de renfort ou de remplissage, pour la réalisation de compositions à base de polyamide.

Les compositions obtenues selon l'invention peuvent être des compositions utilisables pour la réalisation d'articles ou des articles eux-mêmes, par exemple.

Ce procédé simple et économique permet d'obtenir des compositions polyamides présentant de bonnes propriétés mécaniques pour diverses applications dans de nombreux secteurs techniques, notamment en fonction de la proportion de résidus de coussins gonflables de sécurité. Il apparaît de plus de manière tout a fait surprenante que l'ajout de poudre de résidus de coussins gonflables de sécurité permet d'augmenter les propriétés mécaniques, notamment le module élastique, la contrainte à la rupture et les résistance aux chocs des compositions polyamides auxquels ils sont ajoutés.

### EXPOSE DETAILLE DE L'INVENTION

On entend au sens de l'invention « par résidus de coussins gonflables de sécurité » des déchets de production tels que des coupes ou chutes, notamment générés aux étapes d'enduction ou de découpe, ou des produits hors spécifications qui ne sont pas commercialisables, ou encore des articles ou morceaux d'articles en fin de vie.

Ces résidus sont obtenus à partir de coussins gonflables de sécurité à base de polyamide, comme le polytétraméthylène adipamide de polyester. Ces articles sont généralement sous forme de tissés de fibres, sur une ou plusieurs couches, et comprennent un revêtement à base de silicone. Les coussins gonflables de sécurité ne présentent généralement pas de charges de renfort et/ou de remplissage.

Les résidus de coussins gonflables de sécurité, tels que les coussins ou restes de coussins ou coupes ou chutes de coussins, sont généralement coupés ou broyés puis mis sous forme de poudre.

Ladite poudre est une poudre micrométrique et présente une distribution granulométrique D50 comprise entre 50 et 400 µm, plus préférentiellement entre 100 et 350 µm.

La distribution granulométrique des objets peut être obtenue par mesure de diffraction laser, notamment sur un granulomètre de chez Malvern, par exemple en utilisant le module en voie humide. La maille d50 est la dimension telle que 50% des particules sont plus petites que cette dimension et 50% des particules sont plus grandes que cette dimension. L'analyse granulométrique par diffraction laser peut être réalisée selon les indications de la norme AFNOR ISO 13320-1.

A titre d'exemple on peut mesurer la distribution granulométrique en suivant le protocole suivant : on utilise un granulomètre à diffraction de la lumière Malvern Mastersizer 2000 équipé du module hydro S, après mise en suspension de l'échantillon dans de l'éthanol. Les conditions de mesure sont les suivantes : agitation dans la cuve du granulomètre : 1400 tr/min ; modèle optique: Fraunhofer ; gamme de mesure : 100 nm à 3000 µm.

La poudre peut notamment être obtenue selon des procédés usuels et connus notamment dans le domaine de l'industrie papetière, comme par exemple la micronisation, le frottement mécanique, ou l'utilisation d'un défibreur.

On peut par exemple procéder à une micronisation de résidus de coussins gonflables de sécurité, généralement préalablement broyés, par micronisation dans un microniseur à couteaux ou disques équipé d'une grille. Cette grille peut présenter une maille comprise entre 50 et 500 µm. Selon un tel procédé, on observe généralement deux types de particules après micronisation : des particules sphériques et des particules fibreuses.

La poudre selon l'invention peut comprendre des particules sphériques ou sensiblement sphériques et/ou des particules fibreuses. La poudre selon l'invention peut comprendre des particules sphériques ayant un diamètre compris entre 15 et 200 µm et des particules fibreuses ayant une longueur comprise entre 200 et 1100 µm.

La poudre peut être séchée dans le but d'éliminer l'eau afin de ne pas conduire une hydrolysation du polyamide lors des procédés de mise en fusion ultérieurs.

Le matériau polyamide peut se présenter notamment sous forme de poudre ou de granulés. Le matériau polyamide peut notamment être ajouté aux poudres de résidus de coussins sous forme de granulés de polyamide vierge, ou sous forme de granulés comprenant des charges de renfort ou de remplissage ou autres divers additifs classiquement utilisés dans le domaine.

Comme type de polyamide, on peut citer, par exemple, les polyamides semi-cristallins ou amorphes, tels que les polyamides aliphatiques ou semi-aromatiques. On peut notamment citer les (co)polyamides 6 ; 6.6; 4.6; 6.10 ; 6.12 ; 11, 12, et/ou mélanges, tels que les polyamides 6/6.6.

Pour améliorer les propriétés mécaniques de la composition polyamide selon l'invention, il peut être avantageux de lui adjoindre au moins une charge de renfort et/ou de remplissage préférentiellement choisie dans le groupe comprenant les charges fibreuses telles que les fibres de verre, les fibres de carbone et les fibres aramides, les charges minérales non fibreuses telles que les argiles, le kaolin, le mica, la wollastonite, et la silice. Le taux d'incorporation en charge de renfort et/ou de remplissage est conforme aux standards dans le domaine des matériaux composites. Il peut s'agir par exemple d'un taux de charge de 1 à 80 %, de préférence de 10 à 70 %, notamment entre 20 et 50 %, par rapport au poids total de la composition.

La composition selon l'invention peut en outre comprendre des additifs usuellement utilisés pour la fabrication de compositions polyamides destinées à être moulées. Ainsi, on peut citer les lubrifiants, les agents ignifugeants, les plastifiants, les agents nucléants, les catalyseurs, les agents d'amélioration de la résilience comme des élastomères éventuellement greffés, les stabilisants lumière et/ou thermique, les antioxydants, les antistatiques les, colorants, les pigments, les matifiants, les additifs d'aide au moulage ou autres additifs conventionnels.

On peut également ajouter des agents compatibilisants entre le matériau polyamide et les résidus, tel que par exemple un agent de couplage aminosilane ou un polymère greffé anhydride maléique.

Pour la réalisation d'une composition polyamide, ces charges et additifs peuvent être ajoutés au polyamide par des moyens usuels adaptés à chaque charge ou additif, tels que par exemple lors de la polymérisation ou en mélange en fondu. Les charges sont préférentiellement ajoutées au polyamide par voie fondue, notamment lors d'une étape d'extrusion du polyamide, ou par voie solide dans un mélangeur mécanique, en même temps que la poudre de résidus de coussins ; le mélange solide pouvant ensuite être mis en fusion, par exemple par un procédé d'extrusion.

La poudre de résidus de coussins peut être mélangée à un matériau polyamide de diverses manières. On peut par exemple effectuer un mélange à froid, notamment dans un mélangeur mécanique, puis procéder à la mise en fusion du mélange, notamment du polyamide, par exemple pour fabriquer des granulés, notamment en utilisant une extrudeuse. Il est également possible de placer ledit mélange à froid dans une presse à injecter pour la réalisation d'articles.

Il est également possible de mélanger à chaud, notamment dans une extrudeuse ou une presse à injecter la poudre de résidus de coussins et le matériau polyamide ; pour la réalisation de granulés ou d'articles. A cet effet, on peut par exemple ajouter au même moment, ou de manière différée la poudre de résidus de coussins et le polyamide. On peut par exemple ajouter la poudre en veine fondue dans l'extrudeuse.

On peut par exemple procéder au mélange dans une extrudeuse du matériau polyamide à l'état fondu avec la poudre des résidus de coussins gonflables de sécurité, et éventuellement des additifs et des charges de renfort ou de remplissage, pour la réalisation de compositions à base de polyamide, notamment des granulés.

Il est possible d'éliminer l'eau par dégazage notamment lors de la mise en fusion mélange du matériau polyamide et de la poudre de résidus, notamment dans l'extrudeuse.

On ajoute de 15 à 50 % en poids de poudre de résidus de coussins par rapport au poids total de la composition.

Les compositions selon l'invention peuvent être utilisées comme matière première, par exemple comme matrice, notamment dans le domaine des plastiques techniques, par exemple pour la réalisation d'articles obtenus par moulage, par moulage par injection, par injection/soufflage, par extrusion ou par extrusion/soufflage, ou par filage, ou pour l'obtention de film. Les compositions peuvent être par exemple utilisées pour la fabrication par extrusion de monofilaments, filaments, fils et fibres. Les articles peuvent également être des produits semi-finis dans une grande variété de dimensions qui peuvent être usinés. Des assemblages peuvent être réalisés par soudure ou collage par exemple. Les articles réalisés par extrusion peuvent être notamment des tubes, barres, profilés, plaques, feuilles et/ou corps creux.

Les pièces moulées sont réalisées par fusion des granulés produits ci-dessus et alimentation de la composition à l'état fondu dans des dispositifs de moulage par injection. Les articles réalisés par moulage par injection peuvent être des pièces du domaine de l'automobile, du bâtiment ou de l'électricité.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

Les composés utilisés dans les exemples sont les suivants :
- PA66 : polyamide 66 vendu sous la dénomination Stabamid™ 27AE1 par la société Rhodia
- Résidus d'air bag de taille environ 1 cm². Les air-bags utilisés sont des déchets en fin de vie, broyés en morceaux, à base de polyamide 66 et enduits sur une face de silicone réticulé. Ces résidus sont obtenus par broyage dans un broyeur Herbold comprenant une rangée de couteaux fixe. La teneur en polymère silicone est de 10 % en poids
- Poudre de résidus d'air bag ayant été micronisé puis tamisé sur une grille de 100 µm présentant une distribution granulométrique d50 de 100 µm. La teneur en polymère silicone est de 10 % en poids
- Fibres de verre standards de type E
- Additifs : stabilisants thermiques et anti-oxydants

La poudre de résidus d'air bag est obtenue par micronisation des résidus d'air bag de taille environ 1 cm² décrits précédemment, par un microniseur Herbold avec une rangée de couteaux fixes et une rangée de couteaux mobiles avec une vitesse de rotation maximum de 1500 tr/min environ, et une grille de 100 µm.

### Exemple 1 : Réalisation de formulations chargées à base PA66, contenant entre 0 et 30% en poids d'air-bags en fin de vie

Les expérimentations ont été réalisées sur une extrudeuse bi-vis de laboratoire Leistritz (Diamètre vis D de 34 mm, Ecartement d'axe de 30 mm et longueur de 35 mm).

La température du fourreau a été maintenue constante à 285°C sur toute la longueur de la vis. Le profil de vis a été conçu de telle façon que l'introduction des résidus ou de la poudre de résidus d'air-bags soit réalisée en veine fondue et qu'un dégazage soit effectuée en queue d'extrudeuse. Pour chacun des essais la vitesse de rotation de la vis est de 290 rpm et le débit de l'extrudeuse est de 10kg/h.

Après extrusion, les granulés ont été injectés sur une presse Arburg (force de fermeture 35 t, Diamètre vis 30 mm, Longueur de vis 15 mm, Pression fondu maximum 1290 bar).

Chaque pièce a été réalisée avec une température du fondu de 285°C et une température du moule de 80°C. Toutes les formulations comprennent 30 % en poids de fibres de verre.

Les caractéristiques en traction ont été évaluées sur les pièces DAM selon la norme ISO 527/1A (Zwick 1464 dans les conditions suivantes : extensomètre L0 = 25mm, vitesse pendant le module: 1 mm/mn, détermination du module entre 0,05 et 0,25% de déformation, vitesse d'essai : 5mm/mn).

Les caractéristiques des diverses formulations sont reportées au Tableau 1 ci-dessous.

**Tableau 1**

| **Formulations** | **Résidus air-bag (%/p)** | **Résilience (kJ/m²)** | **Module E (Mpa)** | **Contrainte à la rupture (Mpa)** | **Déformation à la rupture (%)** |
|---|---|---|---|---|---|
| C1 | 0 | 82 | 10300 | 184 | 3 |
| C2 | 26% résidus | 62 | 9360 | 149 | 3,1 |
| 1 | 17% poudre | 78 | 10000 | 173 | 3,5 |
| 2 | 30% poudre | 73 | 9600 | 156 | 4 |

On observe ainsi un maintien des propriétés mécaniques avec les formulations selon l'invention comprenant de la poudre d'air-bags enduits par rapport à l'ajout de résidus d'air bag simplement broyés.

## Revendications

1. Procédé de fabrication d'une composition polyamide comprenant au moins une étape de mélange à froid ou à l'état fondu d'un matériau polyamide avec de la poudre de résidus de coussins gonflables de sécurité, lesdits résidus étant des déchets de production, ou des produits hors spécifications qui ne sont pas commercialisables, ou encore des articles ou morceaux d'articles en fin de vie, et ladite poudre étant obtenue à partir de coussins gonflables de sécurité à base de polyamide comprenant un revêtement à base de silicone, **caractérisé en ce que** l'on mélange de 15 à 50 % en poids de résidus par rapport au poids total de la composition et **en ce que** la poudre présente une distribution granulométrique D50 comprise entre 50 et 400 µm, ladite granulométrie étant réalisée avec un granulomètre à diffraction de la lumière Malvern Mastersizer 2000 équipé du module hydro S, après mise en suspension de l'échantillon dans de l'éthanol, dans les conditions de mesure suivantes : agitation dans la cuve du granulomètre : 1400 tr/min ; modèle optique : Fraunhofer ; gamme de mesure : 100 nm à 3000 µm.

2. Procédé selon la revendication 1, **caractérisé en ce que** la poudre comprend des particules sphériques ayant un diamètre compris entre 15 et 200 µm et des particules fibreuses ayant une longueur comprise entre 200 et 1100 µm.

3. Procédé selon la revendication 1 ou 2, **caractérisé en ce que** le mélange est effectué à froid et est suivi d'une mise en fusion du mélange.

4. Procédé selon la revendication 1 ou 2, **caractérisé en ce que** le mélange est effectué à chaud.

5. Procédé selon l'une quelconque des revendications 1 à 4, **caractérisé en ce que** le matériau polyamide est ajouté aux résidus sous forme de granulés de polyamide vierge ou sous forme de granulés comprenant des charges de renfort ou de remplissage et autres additifs.

6. Procédé selon l'une quelconque des revendications 1 à 5, **caractérisé en ce que** l'on ajoute également des charges de renfort ou de remplissage choisis dans le groupe constitué par : les charges fibreuses telles que les fibres de verre, les fibres de carbone et les fibres aramides, et les charges minérales non fibreuses telles que les argiles, le kaolin, le mica, la wollastonite, et la silice.

## Patentansprüche

1. Verfahren zur Herstellung einer Polyamidzusammensetzung, das mindestens einen Schritt des Mischens eines Polyamidmaterials mit Pulver von Airbag-Rückständen im Kalten oder im schmelzflüssigen Zustand umfasst, wobei die Rückstände Abfallprodukte aus der Produktion oder Produkte außerhalb der Spezifikationen, die nicht handelsfähig sind, oder auch Gegenstände oder Stücke von Gegenständen am Ende der Nutzungsdauer sind und das Pulver aus Airbags auf der Basis von Polyamid erhalten wird, die eine Beschichtung auf Silikonbasis umfassen, **dadurch gekennzeichnet, dass** man 15 bis 50 Gew.-% Rückstände, bezogen auf das Gesamtgewicht der Zusammensetzung, mischt und dass das Pulver eine Partikelgrößenverteilung D50 zwischen 50 und 400 µm aufweist, wobei die Größenverteilung mit einem Lichtbeugungsgranulometer Malvern Mastersizer 2000, ausgerüstet mit einem Hydro S-Modul, nach dem Suspendieren der Probe in Ethanol unter den folgenden Messbedingungen durchgeführt wird: Rühren in dem Gefäß des Granulometers: 1400 U/min; optisches Modell: Fraunhofer; Messbereich 100 nm bis 3000 µm.

2. Verfahren nach Anspruch 1, **dadurch gekennzeichnet, dass** das Pulver kugelförmige Partikel mit einem Durchmesser zwischen 15 und 200 µm und faserförmige Partikel mit einer Länge zwischen 200 und 1100 µm umfasst.

3. Verfahren nach Anspruch 1 oder 2, **dadurch gekennzeichnet, dass** das Mischen im Kalten durchgeführt wird und dass darauf Schmelzen des Gemischs folgt.

4. Verfahren nach Anspruch 1 oder 2, **dadurch gekennzeichnet, dass** das Mischen im Heißen durchgeführt wird.

5. Verfahren nach einem der Ansprüche 1 bis 4, **dadurch gekennzeichnet, dass** das Polyamidmaterial zu den Rückständen in Form von Granulat aus reinem Polyamid oder in Form von Granulat, das Verstärkungs- oder Füllstoffe und andere Additive umfasst, zugegeben wird.

6. Verfahren nach einem der Ansprüche 1 bis 5, **dadurch gekennzeichnet, dass** man außerdem Verstärkungs- oder Füllstoffe hinzugibt, die aus der Gruppe ausgewählt sind, bestehend aus: faserförmigen Füllstoffen, wie Glasfasern, Kohlenstofffasern und Aramidfasern, und mineralischen nicht-faserförmigen Füllstoffen, wie Tone, Kaolin, Glimmer, Wollastonit und Siliziumdioxid.

## Claims

1. Process for manufacturing a polyamide composition comprising at least one step of cold blending or melt blending of a polyamide material with the powder of airbag residues, said residues being production scrap, or off-spec products that are not saleable, or else end-of-life articles or fragments of articles, and said powder being obtained from polyamide-based airbags comprising a silicone-based coating, **characterized in that** from 15% to 50% by weight of residues relative to the total weight of the composition are blended and **in that** the powder has a particle size distribution D50 of between 50 and 400 µm, said particle size analysis being carried out with a Malvern Mastersizer 2000 light diffraction particle size analyser equipped with the Hydro S module, after suspending the sample in ethanol, under the following measurement conditions: stirring in the cell of the particle size analyser: 1400 rpm; optical model: Fraunhofer; measurement range: 100 nm to 3000 µm.

2. Process according to Claim 1, **characterized in that** the powder comprises spherical particles having a diameter between 15 and 200 µm and fibrous particles having a length between 200 and 1100 µm.

3. Process according to Claim 1 or 2, **characterized in that** the blending is carried out at cold and is followed by a melting of the blend.

4. Process according to Claim 1 or 2, **characterized in that** the blending is carried out at hot.

5. Process according to any one of Claims 1 to 4, **characterized in that** the polyamide material is added to the residues in the form of virgin polyamide granules or in the form of granules comprising reinforcing or extending fillers and other additives.

6. Process according to any one of Claims 1 to 5, **characterized in that** reinforcing or extending fillers selected from the group consisting of: fibrous fillers such as glass fibres, carbon fibres and aramid fibres, and non-fibrous mineral fillers such as clays, kaolin, mica, wollastonite and silica, are also added.
